# EUROPEAN PATENT SPECIFICATION

(11) **EP 3 631 027 B1**
(45) Date of publication and mention of the grant of the patent: **02.07.2025**
(21) Application number: 18734293.6
(22) Date of filing: 24.05.2018
(51) Int. Cl.: C22B 1/00, C22B 11/00, C22B 3/44, C22B 7/00

(54) **PROCESS FOR THE HYDROMETALLURGICAL TREATMENT OF ELECTRONIC BOARDS**
HYDROMETALLURGISCHES VERFAHREN ZUR AUFBEREITUNG BESTÜCKTER LEITERPLATTEN
PROCEDE HYDROMETALLIQUE POUR LA RETRAITEMENT DE PCB INTÉGRÉS

(30) Priority: 26.05.2017 IT 201700057739
(43) Date of publication of application: 08.04.2020
(73) Proprietor: Smart Waste Engineering S.r.l., 67100 L'Aquila (AQ) (IT)
(72) Inventor: BIRLOAGA, Ionela, 67100 Monteluco di Roio (AQ) (IT); VEGLIÒ, Francesco, 67100 L'Aquila (AQ) (IT); DE MICHELIS, Ida, 67100 Monteluco di Roio (AQ) (IT); FERELLA, Francesco, 67100 Monteluco di Roio (AQ) (IT)
(74) Representative: Cavattoni, Raimondi & Luppi Srl
(86) International application number: PCT/IB2018/053693
(87) International publication number: WO 2018/215967

(56) References cited:
- WO-A1-2011/130622
- US-A- 4 758 353
- IONELA BIRLOAGA ET AL: "Study of multi-step hydrometallurgical methods to extract the valuable content of gold, silver and copper from waste printed circuit boards", JOURNAL OF ENVIRONMENTAL CHEMICAL ENGINEERING, vol. 4, no. 1, 1 March 2016 (2016-03-01), pages 20 - 29, XP055440685, ISSN: 2213-3437, DOI: 10.1016/j.jece.2015.11.021
- IONELA BIRLOAGA ET AL: "An advanced study on the hydrometallurgical processing of waste computer printed circuit boards to extract their valuable content of metals", WASTE MANAGEMENT., vol. 34, no. 12, 18 September 2014 (2014-09-18), US, pages 2581 - 2586, XP055440682, ISSN: 0956-053X, DOI: 10.1016/j.wasman.2014.08.028
- BIRLOAGA IONELA ET AL: "Study on the influence of various factors in the hydrometallurgical processing of waste printed circuit boards for copper and gold recovery", WASTE MANAGEMENT, ELSEVIER, NEW YORK, NY, US, vol. 33, no. 4, 29 January 2013 (2013-01-29), pages 935 - 941, XP028529483, ISSN: 0956-053X, DOI: 10.1016/J.WASMAN.2013.01.003

## Description

### Technical field of the invention

The present invention relates to a hydrometallurgical process, the main purpose of which is to extract Cu, Sn, Zn, Au and Ag from waste electronic boards by means of hydrometallurgical treatments.

The proposed process is low-cost, eco-friendly, easily manageable and innovative in that it is based on the "zero-liquid discharge" (ZLD) philosophy, with recycling of most of the water used.

### Prior art

The generation of waste of electric and electronic equipment (WEEE) has been continuously increasing during the last few decades.

In each of these devices at least one electronic board is present. This type of waste is somewhat difficult to treat owing to the presence of more than 60 different elements in the components. As regards the materials, about 35% by weight consists of plastics, 35% by weight of ceramic materials and 30% by weight of base, precious and special chemical elements. Consequently, various physical/chemical technologies have been proposed for the treatment of waste electronic boards. The physical methods, although more sustainable in environmental terms and very efficient with regard to the recovery of the base metals (US 8,800,775 B2), have the drawback that they use a large amount of energy, but in particular high percentages of precious metals are lost in the various fractions which are separated.

Chemical processes based on high-temperature treatments at present constitute the technologies which are most widely used for such waste. However, these processes have a high energy consumption. Moreover, the formation of toxic fumes, loss of plastics and high capital investment represent other important factors which must be taken into account.

Hydrometallurgical processes, combined with pre-treatments, are regarded as being the most suitable technologies. There exist already published patents which use these technologies (WO2011130622; WO2015052658; CN1603432). In general, they use highly toxic chemical reagents (for example aqua regia) which could generate toxic gases and also require special equipment resistant to these chemical compounds. Moreover, large quantities of liquid and solid waste are also generated.

It is therefore required to develop a technology able to solve the problems described above. The hydrometallurgical method described in this invention offers the main advantages of easy control and management of the various operations, minimization of the water consumption, good levels of recovery of copper, tin, gold and silver, as well as no discharge of waste solutions. Studies relating to this type of treatment were conducted during the preparation and drafting of the previous works published by the inventors (Birloaga et al, 2013, 2014, 2016). These studies formed the initial basis for the subject of the present invention.

The present invention relates to a hydrometallurgical process which differs mainly from the previously published data (Birloaga et al., 2013, 2014, 2016) in that a further metal (tin) is recovered, the process waste solutions are treated and the water recovered via the treatment is used again.

The flocculation process based on EPI-DMA used for the treatment of waste water is mentioned by the patent US 4758353, but the specific application of this chemical compound for the selective recovery of tin from the solution for leaching electronic boards using sulfuric acid and hydrogen peroxide is not mentioned in any patent and in scientific literature in general.

Many of the methods used for the recovery of metastannic acid are based on neutralization with alkaline reagents or on centrifuging.

Moreover, in the present invention, the use of EPI-DMA for the flocculation of colloidal tin does not require any neutralization step, since the reagent is added directly into the solution as such obtained from leaching.

The treatment of the waste solutions resulting from the process for recovery of gold and silver from the electronic boards (leaching using thiourea, ferric sulfate and sulfuric acid, neutralization using sodium hydroxide and cementation using metallic zinc powder) by means of Fenton's reagents and calcium hydroxide (Ca(OH)₂ is not cited in any document of the known scientific and patent literature.

Despite the fact that the Fenton process is widely used for degradation of organic compounds, it has never been used for the treatment of waste solutions of this type.

A further innovative feature of the invention consists in the integration of this treatment in the mixture of heterogeneous waste waters and solutions resulting from different stages of the recycling process.

The innovative aspect of the entire hydrometallurgical treatment also consists in the application of the "zero liquid discharge" philosophy to the recovery of Au, Ag, Cu, Sn from boards, the entire recovery process comprising all the various treatments and not each procedure separately from the other ones.

### Summary of the invention

The hydrometallurgical treatment of waste electronic boards (PCBs) is claimed in the accompanying claims.

Further objects will become clear from the detailed description of the invention which follows.

### Brief description of the figures

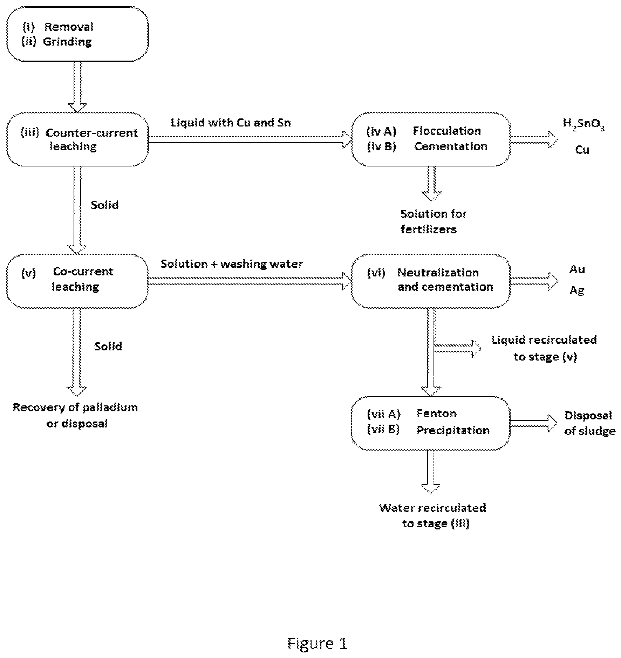

Figure 1 shows a flow chart of the invention.

### Detailed description of the invention

The treatment method according to the invention comprises the following main stages:
(i) Manual or mechanical, automatic or semi-automatic removal of the electronic components containing dangerous substances (such as lead and electrolytes of batteries and capacitors) from the surface of the boards;
(ii) crushing and grinding the boards to a particle size of less than 2 mm;
(iii) first counter-current leaching of the ground boards in order to recover the base metals, i.e. non-precious metals such as iron, zinc, tin, copper, lead, nickel and as described below;
(iv) selective recovery of the non-precious metals from the solution of the stage (iii) by means of flocculation and cementation/precipitation techniques;
(v) second leaching of the ground boards obtained from the treatment of the first leaching stage (iii), in order to extract the gold and silver;
(vi) recovery of the precious metals from the solution obtained from stage (v) by means of neutralization and cementation, with subsequent separation of the solids containing gold and silver from the solution;
(vii) treatment of the waste solution obtained from stage (vi) by means of application of an oxidation process followed by neutralization and precipitation.

Since the reagents used in this process are not based on the use of cyanides and high recovery levels are achieved, this method is considered to be economical and more sustainable from an environmental point of view compared to the currently used processes.

The flow chart illustrating the process is shown in Fig. 1.

With reference to Figure 1, the preferred, but non-limiting version of the invention is described in detail below.

Stages (i) and (ii) are carried out using methods and procedures known per se.

### (iii) First counter-current leaching process

The electronic boards which have already been decontaminated and stripped of the undesirable electronic components and already ground are leached by means of a first counter-current leaching stage. This first leaching operation is preferably carried out in two steps, during each of which the ground material obtained from the pre-treatments is treated and separated beforehand into two fractions. In the first step a freshly prepared acid solution is used, while in the second step the same solution is used again after filtering (i.e. after separating it from the solid fraction). In this way, a solution with a greater concentration of base metals, in particular copper and tin, is obtained: each of the two steps has a solid concentration of 10-20% wt/vol in a solution of sulfuric acid with concentration of 1.5-2 mol/l, and oxygenated water, typically in an amount of 20% vol. The necessary conditions for achieving a successful outcome of the process are mechanical stirring in a reactor, at a speed of at least 100-300 rpm, and ambient temperature and pressure conditions for a duration of 1-3 h for each of the two steps. In the test conditions indicated, practically all of the copper is extracted as sulfate and use of the reagents is optimized since the mass of metal extracted per unit of acid used is maximum. At the end of each step, the solution, in which the copper is solubilized as sulfate and the tin is present as metastannic acid, is separated from the solid by means of filtration and the solid, consisting of the ground boards in which gold and silver to be recovered are still present, is washed with a sufficient quantity of water, after counter-current leaching. This washing water is recovered and may be used for the preparation of a new solution for a further copper leaching procedure as described above. This is due to its highly acid nature, since it removes nearly all the acids and base metal complexes retained in the solid after its separation by solution.

At the end of the first leaching process the liquid is separated by means of filtration and transferred to the second stage (ii), and likewise the ground solid is separated and transferred to the following stage (v).

### (iv) Flocculation and cementation/precipitation

### (iv A) Flocculation

Flocculation is carried out on the waters obtained from stage (iii) and containing copper mainly as sulfate and tin as metastannic acid, which were obtained after separation of the solid by means of filtering.

During the flocculation stage the tin is recovered by means of precipitation with flocculating agents. Flocculation is preferably carried out in two steps. The metastannic acid is very difficult to recover from the solution obtained in the previous stage (iii), using a simple filtration procedure, so that the use of cationic polyelectrolytes is considered appropriate. This type of polyelectrolyte, which belongs to the group of polyamine flocculants, known per se, such as the epichlorohydrin-dimethylamine polyamines [EPI-DMA], is able to capture and aggregate the colloidal particles in large floccules which may be more easily separated by means of filtration from the solution. Then a solution of 10% wt polyamine is added to the solution which is rich in (non-precious) base metals obtained during the previous step (iii). This process is carried out with constant stirring at 100-300 rpm for about 30-60 min. The solid consisting of metastannic acid is separated by means of filtration and washed with water. The final recovery of tin, in the form of metastannic acid aggregated in particles of a certain size, is more than 50% of the initial quantity of tin contained in the electronic boards.

### (iv B) Cementation

Cementation is performed using zinc powder in the solution obtained from stage (iv A) without the flocculent precipitate, which has been removed. The washing water obtained from stage (iii) may be advantageously added to this solution in order to extract the copper content. Cementation is performed by adding metallic zinc powder in a greater quantity, generally 40-50%, than the stoichiometric quantity required by the chemical reaction. Cementation is carried out under ambient temperature and pressure conditions while stirring at 100-300 rpm for 30-60 min. At the end, the metallic precipitate is separated from the solution by means of filtration and then washed with a suitable volume of water. The degree of total recovery (leaching and cementation) of the copper is greater than 95%.

The resultant solution and the washing water may be sold to companies which produce fertilizers for intensive agriculture methods.

### (v) Second leaching for extraction of the precious metals gold and silver

The second leaching is performed in co-current conditions on the remaining solid obtained from stage (iii); preferably the solid is divided up into two or more fractions. In order to carry out the second leaching operation a solution containing the following is used: thiourea as reagent in a concentration of 10-30 g/l, ferric sulfate as oxidizer in a concentration of 10-30 g/l, and 0.2-0.5 mol/l of sulfuric acid so as to ensure an acid reaction environment, with pH of between 0.5 and 1, and the solid is placed in the solution thus prepared. The reaction is carried out with continuous stirring at 100-300 rpm for 1-3 h in ambient temperature and pressure conditions and with a concentration of solid resulting from filtration during the counter-current process (stage iii) equal to 5-15% wt/vol. Then, after filtration and subsequent washing of the remaining solid, 1-5 g/l f of thiourea are added to the filtered solution and it is used again to leach further gold and silver from other remaining solid obtained again from filtration during the process of stage (iii). After separation of the liquid (solution containing gold and silver) from the solid, washing of this solid is performed using the same water as that used in the previous washing operation.

In this way, by reusing both the leaching solution and the water for washing the solid, preferably the two or more fractions of solids, it is possible to increase approximately twofold the concentration of gold and silver in the two or more liquid streams.

Moreover, cost savings are achieved since the use of chemical reagents and water is reduced.

### (vi) Neutralization and cementation of the solution obtained in (v) for the recovery of gold and silver

The mixture of solution and washing water obtained in stage (v) is neutralized with a basic compound, preferably with a 20% wt/vol solution of sodium hydroxide, until a pH of 1.8-2.1 is reached. This procedure is carried out in ambient temperature and pressure conditions with stirring at 100-300 rpm for 10-30 min.

Then metallic zinc powder is added in a suitable amount, i.e. equal to five to twenty times the concentration of the gold in the solution. Once the reaction time has ended, the particles of metallic silver and gold which have formed are separated from the solution by means of filtration and washed with a certain volume of water. The total amount of precious metals recovered is more than 80%.

### (vii) Treatment of the liquid waste

The resultant solution and the washing water from the previous stage (vi) are mixed together and more than 50% of the total volume is recycled in stage (v) for preparation of a new leaching solution. The remaining mixture fraction is treated using two different methods:
(vii A) Fenton process (Bianco et al., 2011. Fenton treatment of complex industrial wastewater: Optimization of process conditions by surface response method. J.Hazardous Materials 186, 1733-1738);
(vii B) neutralization with hydrated lime and consequent precipitation of all the metals contained in the waste solution.

Owing to the chemical reaction between thiourea and ferric sulfate, dangerous organic complexes are formed, such that a suitable treatment of the waste solution is required. The Fenton reagent is widely used because of its powerful oxidizing properties. This reagent consists of a mixture of oxygenated water and ferrous sulfate which produce hydroxyl ions which cause degradation of the organic substances. In connection with the present invention, this process is carried out in ambient conditions for 1 h while stirring at 200 rpm. Once this procedure has been completed, the waste is neutralized, for example with a 10% wt/vol solution of Ca(OH)₂ which causes precipitation of the inorganic elements at a pH of 7-10. The treatment lasts 2-3 h and is carried out in ambient conditions while stirring at 100-300 rpm.

The water thus treated is recovered by means of filtration and recycled in stage (iii) as water for the preparation of the new leaching solution. The remaining solid may be further treated for recovery of the palladium (Behnamfard et al., 2013. Process development for recovery of copper and precious metals from waste printed circuit boards with emphasize on palladium and gold leaching and precipitation. Waste Management 33, 2354-2363) in an external plant, or removed for disposal in a tip or in a waste-to-energy plant.

The present invention is not limited to the form and sequence of operations described above, but the details thereof may be varied.

The following examples are to be regarded as illustrating the present invention and are not to be regarded as limiting in any way the scope thereof.

### EXAMPLE

The electronic components containing dangerous substances, in particular transistors and capacitors, were removed from the surface of the boards obtained from the printed circuits of desktop or laptop computers. Crushing and grinding the boards to a particle size of less than 2 mm was then performed by means of a knife mill. The hydrometallurgical method according to the invention was carried out as indicated below.
(iii) First counter-current leaching was carried out on the ground boards in order to recover the base metals, i.e. non-precious metals essentially consisting of tin and copper, as described below; 15g of ground electronic boards (containing 20.84% by weight of copper, 5.15% of tin, 184 mg/kg of gold and 600 mg/kg of silver) were subjected to leaching in 100 ml of solution containing 1.8 mol/l of sulfuric acid and 20% vol of oxygenated water. These working conditions were adopted for the two counter-current steps, both carried at ambient pressure and temperature, for a 1.5 h reaction time while performing magnetic stirring at 200 rpm. After filtering the suspension, the solution contained 78.34 g/l of CuSO₄ and 7.3 g/l of H₂SnO₃.
(iv) Selective recovery of the metals by means of flocculation (stage iv A) and cementation/precipitation techniques (stage iv B) was carried out on the solution obtained from stage (iii); 4 ml of a 10% wt/vol polyamine solution were added to the leaching solution, and after 30 minutes' reaction time with constant stirring at 200 rpm 1.64 g of solid were precipitated. This solid was recovered by means of filtration and washed with 30 ml of water. The wet solid contained 44.4% by weight of H₂SnO₃.
(iv A) The solution separated during filtration and the solid washing water were mixed and subjected to cementation using 3.8 g of metallic zinc in powder form. The duration of the reaction was 30 min, with stirring at 200 rpm, at the end of which the precipitate obtained was filtered and washed with 30 ml water. The final volume of the solution, after filtration, was equal to 125 ml. The final wet solid, with weight of 4.34 g, had a copper content of 71.77% by weight.
(v) Second co-current leaching was carried out on the ground boards obtained from the treatment of stage (iii) in order to extract the gold and silver. Each step was characterized by the following test conditions: 100 ml of solution with 20 g/l of thiourea, 6 g/l of Fe³⁺ and 0.2 mol/l of sulfuric acid. After 1.5 h reaction at ambient pressure and temperature, the suspension was filtered and the remaining solid washed with 30 ml of water. The solid, consisting of residual boards (plastic and a small amount of metal), was stored for disposal. The solution obtained from filtration contained 0.0688 g/l of silver and 0.018 g/l of gold, to which a further 2g/l of thiourea were added; this solution was used to leach a further quantity of solid (composed of boards with no copper and tin) obtained from the stage (iii). At the end of the reaction time (1.5 h), the solid was separated by means of filtration and washed with the same water used in the first step of the present co-current leaching process. The final solution was enriched with the two precious metals and contained specifically 0.110 g/l of silver and 0.034 g/l of gold. This solution was mixed with the final washing water (i.e. that used twice during co-current leaching) which contained in any case 0.100 g/l of silver and 0.030 g/l of gold. This mixture therefore represented the final solution subjected to recovery of the precious metals in stage (vi).
(vi) Recovery of the precious metals from the solution obtained from stage (v) was performed by means of neutralization and cementation; the final solution of stage (v) was neutralized with 3.5 ml of solution containing 20% wt/vol of NaOH. After a reaction time of 15 min, 200 mg of metallic zinc in powder form and, after a further 20 minutes' stirring at 200 rpm, the precipitate obtained was separated by means of filtration and washed with 30 ml of water. The wet weight of the precipitate recovered was 0.23 g. The solution resulting from filtration (120 ml) was mixed with the washing water (30 ml) and 100 ml of this solution were recycled for the preparation of a new solution of thiourea for further co-current leaching in stage (v). 50 ml of the solution were instead subjected to the treatment described in stage (vii).
(vii) Finally a treatment of the solution obtained from stage (vi) was carried out by means of a Fenton oxidation process (stage vii A) followed by neutralization and precipitation (stage vii B). 2 g/l of FeSO₄ and 5 ml of solution containing 30% vol. of H₂O₂ were added to 50 ml of solution to be treated. After a reaction time of 1 h with stirring, 7 ml of solution containing 10% wt/vol of Ca(OH)₂ were added and the reaction with constant stirring lasted 2 h. After filtering the sludges obtained from the reaction, more than 99% of the COD was removed (final concentration of the COD equal to 121 mg/l). The clarified water thus obtained was then used again to prepare the leaching solution in stage (iii) for the extraction of copper and tin from new ground boards.

### References

ANDRE, B., SVITLANA, G., PING, J., MICHAEL, K., 2013. Method for recycling of obsolete printed circuit boards-WO2011130622A1-3.
CHRISTIAN, T., JOËL, M., GERVAIS, V., 2014. METHOD FOR RECOVERING METALS FROM ELECTRONIC WASTE CONTAINING PLASTICS MATERIALS-US8800775B2.
CLAUDIA, B., DANILO, F., ROBERTA, D.C., MASSIMILIANA, P., STEFANO, P., ROBERTA, G., NADIA, T.G., 2016. Hydrometallurgy process for the recovery of materials from electronic boards - WO2015052658A1.
PEIGUO, Z., ZHENG, Z., JINGXI, T., 2005. Technological process for extracting gold, silver and palladium from electronic industry waste CN1603432 (A).
I. BIRLOAGA, I. DEMICHELIS, F. FERELLA, M. BUZATU, F. VEGLIO, Study on the influence of various factors in the hydrometallurgical processing of waste printed circuit boards for copper and gold recovery", Waste Management, April 2013, Volume 33, Issue 4, pp. 935-941.
I., BIRLOAGA, V., COMAN, B., KOPACEK, F., VEGLIO, An advanced study on the hydrometallurgical processing of waste computer printed circuit boards to extract their valuable content of metals, Waste Management, December 2014, Volume 34, Issue 12, pp. 2581-2586.
I. BIRLOAGA, F. VEGLIO, Study of multi-step hydrometallurgical methods to extract the valuable content of gold, silver and copper from waste printed circuit boards, Journal of Environmental Chemical Engineering, 4(1), 2016, pp. 20-29.

## Claims

1. Process for the treatment of waste electronic boards, which comprises the following main stages:
(i) removal of the electronic components containing dangerous substances from the surface of the boards; followed by
(ii) crushing and grinding the boards to a particle size of less than 2 mm;
(iii) bringing the ground boards into contact with a first leaching solution, in which the first leaching is performed in counter-current conditions and carried out in two steps in each of which the ground material obtained from the treatments (i) and (ii) is treated;
wherein in a first step a freshly prepared acid solution is used, said solution comprising sulfuric acid in a concentration of 1.5-2 mol/l and hydrogen peroxide, and in a second step the same solution used in the first step is used again after separating it from a first solid fraction; and wherein, in order to recover tin and copper, at the end of stage (iii) a solution containing copper solubilized as sulfate and tin as metastannic acid is separated from a second solid fraction by means of filtration and the solid fractions, consisting of the ground boards in which gold and silver to be recovered are still present, is washed with water;
(iv) selective recovery of the tin and copper from the solution of stage (iii) by means of flocculation and cementation and precipitation techniques, wherein the tin is recovered by means of a flocculation stage with flocculating agents in order to precipitate a solid flocculent precipitate consisting of metastannic acid which is separated by means of filtration from the solution of stage (iii), and copper is recovered by means of a cementation stage carried out by adding zinc powder to the solution obtained from the flocculation stage, without the flocculent precipitate which has been removed, a metallic precipitate being separated from the solution by means of filtration at the end of cementation;
(v) bringing the solid fractions obtained from the first leaching treatment of stage (iii) into contact with a second leaching solution including thiourea, ferric sulfate and sulfuric acid, in which the second leaching is performed in order to extract gold and silver;
(vi) recovery of gold and silver from the solution obtained from stage (v) by means of neutralization and cementation.

2. Process according to claim 1, wherein in the first leaching operation the acid solution used comprises hydrogen peroxide in amount equal to 20% vol.

3. Process according to claim 1 or 2, wherein the washing water from stage (iii) is recovered and used for the preparation of a new solution for the first leaching operation.

4. Process according to any one of claims 1-3, wherein the flocculation stage is carried out by adding to the solution of the previous stage (iii) a polyamine flocculant comprising a solution of 10% wt polyamine; the resultant solid, consisting of metastannic acid, being separated by means of filtration from the flocculation solution and washed with water.

5. Process according to claim 4, wherein the polyamine flocculant is a polyamine obtained from the copolymerization of epichlorohydrin and dimethylamine [EPI-DMA].

6. Process according to claim 1, wherein the metallic precipitate is washed with water and the resultant solution and/or washing water is suitable to be sold as fertilizer.

7. Process according to any one of claims 1-6, wherein the second leaching stage is performed in cross-current conditions on the remaining solid obtained from stage (iii), preferably divided into two or more fractions, a solution containing: thiourea as reagent in a concentration of 10-30 g/l, ferric sulfate as oxidizer in a concentration of 10-30 g/l, and 0.2-0.5 mol/l of sulfuric acid, being used for said second leaching operation, so as to ensure an acid reaction environment, with a pH of between 0.5 and 1; the resulting solid being separated by means of filtration from the solution containing gold and silver.

8. Process according to claim 7, wherein 1-5 g/l of thiourea are added to the solution containing gold and silver and said solution is used again to leach further gold and silver from other solid fractions obtained from filtration during the process of stage (iii).

9. Process according to any one of claims 1-8, wherein the solution of stage (v) is subjected to neutralization and cementation using metallic zinc powder in order to recover gold and silver, at the end of cementation, the metallic gold and silver particles formed being separated from the solution by means of filtration and washed with water.

10. Process according to any one of claims 1-9, wherein the washing waters of the various stages and/or a solution obtained from stage (vi) following recovery of gold and silver are subjected to oxidation using a mixture of hydrogen peroxide and ferrous sulfate and subsequent neutralization with hydrated lime and consequent precipitation of all the metals contained in the waste solution.

## Patentansprüche

1. Verfahren zur Behandlung von Elektronik-Altplatinen, das die folgenden Hauptphasen umfasst:
(i) Entfernen der elektronischen Komponenten, die gefährliche Stoffe enthalten, von der Oberfläche der Platinen, gefolgt von
(ii) Zerkleinern und Mahlen der Platinen auf eine Partikelgröße von weniger als 2 mm;
(iii) In-Kontakt-Bringen der gemahlenen Platinen mit einer ersten Laugungslösung, wobei die erste Laugung unter Gegenstrombedingungen durchgeführt wird und in zwei Schritten ausgeführt wird, in denen jeweils das aus den Behandlungen (i) und (ii) erhaltene gemahlene Material behandelt wird;
wobei in einem ersten Schritt eine frisch hergestellte Säurelösung verwendet wird, die Schwefelsäure in einer Konzentration von 1,5-2 mol/l und Wasserstoffperoxid enthält, und in einem zweiten Schritt die gleiche Lösung wie im ersten Schritt erneut verwendet wird, nachdem sie von einer ersten Feststofffraktion abgetrennt wurde;
und wobei zur Rückgewinnung von Zinn und Kupfer am Ende von Phase (iii) eine Lösung, die als Sulfat gelöstes Kupfer und als Metazinnsäure Zinn enthält, durch Filtration von einer zweiten festen Fraktion getrennt wird und die festen Fraktionen, die aus den gemahlenen Platinen bestehen, in denen noch das zurückzugewinnende Gold und Silber vorhanden ist, mit Wasser gewaschen werden;
(iv) selektives Rückgewinnen von Zinn und Kupfer aus der Lösung von Phase (iii) mittels Flockungs-, Zementierungs- und Fällungstechniken, wobei das Zinn mittels einer Flockungsphase mit Flockungsmitteln zurückgewonnen wird, um einen festen flockigen Niederschlag auszufällen, der aus Metazinnsäure besteht, der durch Filtration von der Lösung von Phase (iii) getrennt wird, und Kupfer mittels einer Zementierungsphase zurückgewonnen wird, der durch Zugabe von Zinkpulver zu der aus der Flockungsphase erhaltenen Lösung ohne den entfernten flockigen Niederschlag durchgeführt wird, wobei am Ende der Zementierung ein metallischer Niederschlag durch Filtration von der Lösung getrennt wird;
(v) Inkontaktbringen der aus der ersten Laugungsbehandlung von Phase (iii) erhaltenen festen Fraktionen mit einer zweiten Laugungslösung, die Thioharnstoff, Eisensulfat und Schwefelsäure enthält, in der die zweite Laugung durchgeführt wird, um Gold und Silber zu extrahieren;
(vi) Rückgewinnen von Gold und Silber aus der in Phase (v) erhaltenen Lösung durch Neutralisation und Zementierung.

2. Verfahren nach Anspruch 1, wobei im ersten Auslaugungsvorgang die verwendete Säurelösung Wasserstoffperoxid in einer Menge von 20 Vol.-% enthält.

3. Verfahren nach Anspruch 1 oder 2, wobei das Waschwasser aus Phase (iii) zurückgewonnen und zur Herstellung einer neuen Lösung für den ersten Auslaugungsvorgang verwendet wird.

4. Verfahren nach einem der Ansprüche 1 bis 3, wobei die Flockungsphase durchgeführt wird durch Hinzugeben zu der Lösung der vorherigen Phase (iii) eines Polyamin-Flockungsmittels, das eine Lösung von 10 Gew.-% Polyamin umfasst; der entstandene Feststoff, bestehend aus Metazinnsäure, wird mittels Filtration von der Flockungslösung getrennt und mit Wasser gewaschen.

5. Verfahren nach Anspruch 4, wobei das Polyamin-Flockungsmittel ein Polyamin ist, das durch Copolymerisation von Epichlorhydrin und Dimethylamin [EPI-DMA] erhalten wird.

6. Verfahren nach Anspruch 1, wobei der metallische Niederschlag mit Wasser gewaschen wird und die resultierende Lösung und/oder das Waschwasser zum Verkauf als Düngemittel geeignet ist.

7. Verfahren nach einem der Ansprüche 1 bis 6, wobei die zweite Laugungsphase unter Kreuzstrombedingungen mit dem verbleibenden Feststoff aus Phase (iii) durchgeführt wird, der vorzugsweise in zwei oder mehr Fraktionen aufgeteilt wird, wobei für den zweiten Laugungsvorgang eine Lösung verwendet wird, die Thioharnstoff als Reagenz in einer Konzentration von 10-30 g/l, Eisensulfat als Oxidationsmittel in einer Konzentration von 10-30 g/l und 0,2-0,5 mol/l Schwefelsäure enthält, um eine saure Reaktionsumgebung mit einem pH-Wert zwischen 0,5 und 1 sicherzustellen; der entstehende Feststoff wird mittels Filtration von der gold- und silberhaltigen Lösung getrennt.

8. Verfahren nach Anspruch 7, wobei der Gold und Silber enthaltenden Lösung 1-5 g/l Thioharnstoff zugesetzt werden und die Lösung erneut verwendet wird, um weiteres Gold und Silber aus anderen festen Fraktionen auszulaugen, die während des Verfahrens der Phase (iii) durch Filtration erhalten wurden.

9. Verfahren nach einem der Ansprüche 1 bis 8, wobei die Lösung aus Phase (v) einer Neutralisation und Zementierung unter Verwendung von metallischem Zinkpulver unterzogen wird, um Gold und Silber zurückzugewinnen, wobei am Ende der Zementierung die gebildeten metallischen Gold- und Silberpartikel durch Filtration von der Lösung getrennt und mit Wasser gewaschen werden.

10. Verfahren nach einem der Ansprüche 1 bis 9, wobei die Waschwässer der verschiedenen Phasen und/oder eine aus Phase (vi) nach der Rückgewinnung von Gold und Silber erhaltene Lösung einer Oxidation unter Verwendung einer Mischung aus Wasserstoffperoxid und Eisensulfat und einer anschließenden Neutralisation mit gelöschtem Kalk und einer daraus folgenden Ausfällung aller in der Abfalllösung enthaltenen Metalle unterzogen werden.

## Revendications

1. Processus de traitement de cartes électroniques de rebut, qui comprend les principales étapes suivantes:
(i) retrait des composants électroniques contenant des substances dangereuses de la surface des cartes ; suivi par
(ii) concassage et broyage des cartes jusqu'à ce que la taille des particules soit inférieure à 2 mm;
(iii) mise en contact des cartes broyées avec une première solution de lixiviation, la première lixiviation étant effectuée dans des conditions de contre-courant et en deux étapes au cours desquelles le matériau broyé obtenu par les traitements (i) et (ii) est traité;
dans lequel on utilise, dans une première étape, une solution acide fraîchement préparée, ladite solution comprenant de l'acide sulfurique à une concentration de 1,5-2 mol/l et du peroxyde d'hydrogène, et dans une deuxième étape, la même solution utilisée dans la première étape est réutilisée après avoir été séparée d'une première fraction solide;
et dans lequel, afin de récupérer l'étain et le cuivre, à la fin de l'étape (iii), une solution contenant du cuivre solubilisé sous forme de sulfate et de l'étain sous forme d'acide métastannique est séparée d'une deuxième fraction solide au moyen d'une filtration et les fractions solides, constituées des cartes broyées dans lesquelles l'or et l'argent à récupérer sont encore présents, sont lavées avec de l'eau;
(iv) récupération sélective de l'étain et du cuivre à partir de la solution de l'étape (iii) au moyen de techniques de floculation, de cimentation et de précipitation, l'étain étant récupéré au moyen d'une étape de floculation avec des agents floculants afin de précipiter un précipité floculant solide constitué d'acide métastannique qui est séparé de la solution de l'étape (iii) au moyen d'une filtration, et le cuivre est récupéré au moyen d'une étape de cimentation réalisée en ajoutant de la poudre de zinc à la solution obtenue à l'issue de l'étape de floculation, sans le précipité floculant qui a été éliminé, un précipité métallique étant séparé de la solution par filtration à la fin de la cimentation;
(v) mise en contact des fractions solides obtenues lors du premier traitement de lixiviation de l'étape (iii) avec une deuxième solution de lixiviation comprenant de la thiourée, du sulfate ferrique et de l'acide sulfurique, la deuxième lixiviation étant effectuée afin d'extraire l'or et l'argent;
(vi) récupération de l'or et de l'argent de la solution obtenue à l'étape (v) par neutralisation et cimentation.

2. Processus selon la revendication 1, dans lequel, lors de la première opération de lixiviation, la solution acide utilisée comprend du peroxyde d'hydrogène en quantité égale à 20 % vol.

3. Processus selon la revendication 1 ou 2, dans lequel l'eau de lavage de l'étape (iii) est récupérée et utilisée pour la préparation d'une nouvelle solution pour la première opération de lixiviation.

4. Processus selon l'une quelconque des revendications 1 à 3, dans lequel l'étape de floculation est réalisée en ajoutant à la solution de l'étape précédente (iii) un floculant polyamine comprenant une solution de 10 % en poids de polyamine ; le solide résultant, constitué d'acide métastannique, étant séparé par filtration de la solution de floculation et lavé à l'eau.

5. Processus selon la revendication 4, dans lequel le floculant polyamine est une polyamine obtenue par copolymérisation d'épichlorhydrine et de diméthylamine [EPI-DMA].

6. Processus selon la revendication 1, dans lequel le précipité métallique est lavé avec de l'eau et la solution résultante et/ou l'eau de lavage peuvent être vendues comme engrais.

7. Processus selon l'une quelconque des revendications 1 à 6, dans lequel la deuxième étape de lixiviation est effectuée dans des conditions de courant croisé sur le solide restant obtenu à l'étape (iii), de préférence divisé en deux fractions ou plus, une solution contenant : de la thiourée comme réactif à une concentration de 10 à 30 g/l, du sulfate ferrique comme oxydant à une concentration de 10 à 30 g/l, et 0,2 à 0,5 mol/l d'acide sulfurique, étant utilisée pour ladite deuxième opération de lixiviation, de manière à assurer un environnement de réaction acide, avec un pH compris entre 0,5 et 1; le solide résultant étant séparé par filtration de la solution contenant l'or et l'argent.

8. Processus selon la revendication 7, dans lequel 1 à 5 g/l de thiourée sont ajoutés à la solution contenant de l'or et de l'argent et cette solution est utilisée à nouveau pour lixivier de l'or et de l'argent supplémentaires à partir d'autres fractions solides obtenues par filtration au cours du processus de l'étape (iii).

9. Processus selon l'une quelconque des revendications 1 à 8, dans lequel la solution de l'étape (v) est soumise à une neutralisation et à une cimentation à l'aide de poudre de zinc métallique afin de récupérer l'or et l'argent, à la fin de la cimentation, les particules d'or et d'argent métalliques formées étant séparées de la solution au moyen d'une filtration et lavées à l'eau.

10. Processus selon l'une quelconque des revendications 1 à 9, dans lequel les eaux de lavage des différentes étapes et/ou une solution obtenue à l'étape (vi) après récupération de l'or et de l'argent sont soumises à une oxydation à l'aide d'un mélange de peroxyde d'hydrogène et de sulfate ferreux, puis à une neutralisation à l'aide de chaux hydratée, ce qui entraîne la précipitation de tous les métaux contenus dans la solution de rebut.
